# DEMANDE DE BREVET EUROPEEN

(11) **EP 1 750 048 A2**
(43) Date de publication de la demande: **07.02.2007**
(21) Numéro de dépôt: 06291114.4
(22) Date de dépôt: 06.07.2006
(51) Int. Cl.: F16L 11/115

(54) **Canalisation stationnaire souterraine pour transport de carburant et procede de fabrication**

(30) Priorité: 01.08.2005 FR 0508195
(71) Demandeur: Nobel Plastiques, 78300 Poissy (FR)
(72) Inventeur: Milhas, Pierre, 51300 Vitry-le-Francois (FR)
(74) Mandataire: Lavialle, Bruno François Stéphane

(57) **Abrégé**

La présente invention concerne une canalisation de transport de carburant comportant un tube intérieur (1) et un tube extérieur (2) coaxiaux entre lesquels un espace est maintenu par un moyen d'entretoisement, le tube extérieur comprenant une couche externe (9) et une couche interne (7), la couche interne étant annelée hélicoïdalement et libre par rapport au tube intérieur pour former le moyen d'entretoisement.

L'invention concerne également un procédé de fabrication de cette conduite.

## Description

La présente invention concerne une canalisation souterraine pour le transport de carburant. L'invention concerne également un procédé de fabrication d'une telle conduite.

La distribution de carburant aux usagers se fait grâce à des stations services implantées le long des routes pour les activités automobiles, dans les ports pour les activités maritimes ou au sein de dépôts pour les applications aériennes et domestiques.

Une station service comprend en général des cuves de stockage incluant une ou des pompes de répartition, et une zone qui est destinée à accueillir le véhicule et qui est équipée de pompes de distribution.

Les pompes de répartition ont pour fonctions de fournir le carburant aux pompes de distribution et de réaliser le mélange des carburants afin d'obtenir l'indice d'octane désiré. En particulier, aux Etats-Unis, trois qualités d'essences sont disponibles à la pompe (Octane 96, 97 et 98) mais les stations ne disposent que de 2 cuves (96 et 98), la troisième qualité d'essence étant obtenue par un mélange 50/50 des deux autres qualités d'essences. Ainsi, il n'existe pas de distribution directe du carburant d'indice d'octane intermédiaire, ce qui réduit les coûts d'infrastructure et de gestion.

La pompe de distribution est incluse dans la borne proche du véhicule et est directement reliée au pistolet de remplissage.

Un ensemble de canalisations stationnaires relie les différents éléments entre eux et, en particulier, les cuves aux pompes de répartition, et les pompes de répartition aux pompes de distribution. Les canalisations ont des diamètres usuellement de 1,27 cm à 6,35 cm.

Les canalisations utilisées dans un tel ensemble sont de deux types : rigides, en acier ou en polymères renforcés de fibres de verre ; ou flexibles, multicouches principalement polymères.

Une canalisation flexible est constituée de deux tubes, multicouches et concentriques, l'un étant contenu dans l'autre. Le tube intérieur est appelé tube primaire (" primary pipe ") et le tube extérieur est appelé tube de rétention (" containment pipe ").

Le tube intérieur sert au transfert du carburant (essences, diesels, kérosène...). Il est composé d'une série de couches concentriques en polymères extrudés (polyamides, polyéthylènes, polymères fluorés...) incluant ou non des couches de renforts (tresses, ruban aluminium...). En général un procédé d'extrusion multicouche tandem est utilisé.

Le tube extérieur sert, en cas de défaillance du tube intérieur, à éviter la contamination des sols. Un espace est aménagé entre le tube intérieur et le tube extérieur pour faciliter l'élimination des carburants s'y trouvant. Le taux de carburant résidant dans cet espace est ainsi périodiquement contrôlé, assurant une non contamination des sols par des phénomènes de suintement ou de perméabilité. Le tube extérieur est composé d'une ou plusieurs couches de polymères extrudés, avec ou sans renforts, suivant les fabricants. Le maintien de l'espace intermédiaire est assuré par des nervures longitudinales (" ribs ") qui maintiennent les deux tubes écartés l'un de l'autre et qui sont ménagées en général par extrusion avec une filière de forme cannelée. Les matériaux utilisés sont principalement des polyoléfines.

L'ensemble des exigences techniques (perméabilité, éclatement, résistance aux fluides...) est répertorié dans la spécification UL971.

Avec l'évolution récente des normes environnementales, les constructions de tubes polymères employées jusqu'à présent ne satisfont plus la spécification UL971. Deux nouveaux critères, en particulier, ont rendu obsolètes la quasi-totalité des produits existants : premièrement, la perméabilité au carburant (phénomène d'évaporation au travers des parois du tube et donc synonyme de pollution) et, deuxièmement, la variation de longueur du tube en immersion dans le carburant. Ce dernier critère est important car de nombreux cas ont été reportés où le tube, se rétractant ou s'allongeant par effet de vieillissement, provoquait la rupture des connecteurs engendrant ainsi des pollutions importantes sur sites.

L'invention concerne une structure de canalisation flexible compatible avec la norme précitée, offrant en particulier un très faible niveau de perméabilité et de changement dimensionnel, pour obtenir une canalisation plus propre et plus sûre.

A cet effet, on prévoit, selon l'invention, une canalisation de transport de carburant comportant un tube intérieur et un tube extérieur coaxiaux entre lesquels un espace est maintenu par un moyen d'entretoisement. La canalisation est caractérisée en ce que le tube extérieur comprend une couche externe et une couche interne, la couche interne étant annelée hélicoïdalement et libre par rapport au tube intérieur pour former le moyen d'entretoisement.

Ainsi, l'espace de rétention du carburant qui fuirait du tube intérieur est délimité par les annelures dont la forme hélicoïdale permet d'évacuer le carburant retenu le long de la canalisation lorsque la quantité de celui-ci est trop importante. L'absence de solidarisation des tubes intérieur et extérieur améliore la flexibilité de la canalisation. L'absence de solidarisation des tubes intérieur et extérieur permet en outre de limiter les conséquences d'une dilatation de la canalisation sur les connecteurs reliant la canalisation aux éléments du circuit dans lequel elle est implantée : lorsque le tube extérieur se dilate, les annelures se rapprochent de sorte que l'effort exercé par le tube extérieur sur les connecteurs est limité. Il est ainsi possible d'obtenir que le tube extérieur exerce sur les connecteurs un effort équivalent à celui provoqué par un allongement inférieur à seulement 0,2 % environ.

De préférence, la couche interne du tube extérieur a un diamètre intérieur minimal supérieur au diamètre extérieur du tube intérieur.

L'absence de solidarisation des tubes intérieur et extérieur est ainsi obtenue de manière simple et l'écoulement le long de la canalisation du carburant qui fuirait du tube intérieur est facilité.

L'invention a également pour objet un procédé de fabrication d'une telle canalisation de transport de carburant. Ce procédé comporte les étapes de :
- réaliser un tube intérieur,
- faire passer le tube intérieur dans une filière d'extrudeuse,
- à la sortie de la filière d'extrudeuse, former des annelures hélicoïdales autour du tube intérieur sur la matière sortant de la filière pour constituer une couche interne d'un tube extérieur libre par rapport au tube intérieur,
- enrubanner la couche interne avec un ruban pour former une couche intermédiaire enrubannée du tube extérieur,
- extruder une couche externe du tube extérieur.

Le ruban permet d'éviter que le matériau de la couche externe ne vienne remplir les annelures à la sortie de la filière, ce qui limiterait la flexibilité de la canalisation. Il est alors possible d'avoir une couche externe de relativement faible épaisseur.

D'autres caractéristiques et avantages ressortiront à la lecture de la description qui suit d'un mode de réalisation particulier non limitatif de l'invention.

Il sera fait référence aux dessins annexés, parmi lesquels :
- la figure 1 est une vue en coupe longitudinale d'une canalisation conforme à l'invention,
- la figure 2 est une vue schématique d'une unité d'extrusion pour la fabrication de cette canalisation.

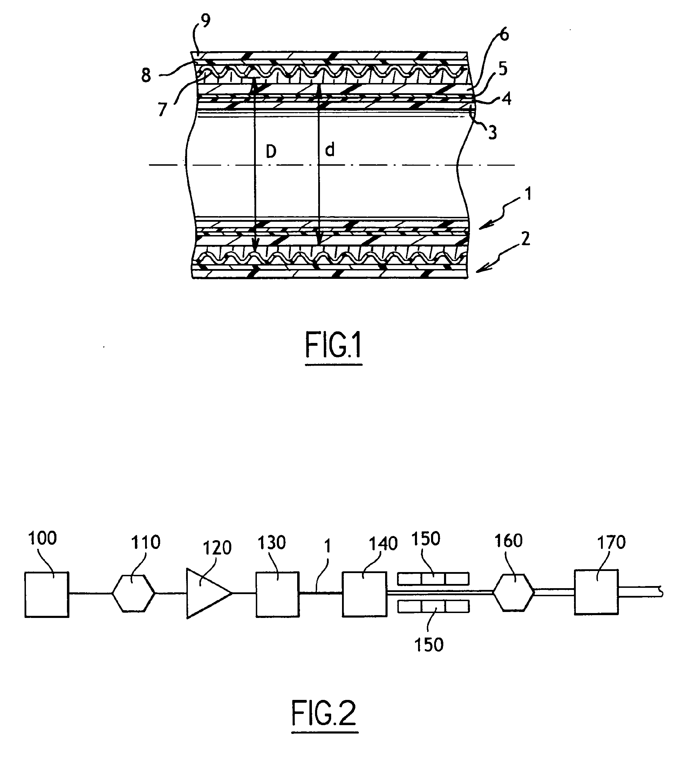

En référence à la figure 1, la canalisation conforme à l'invention comprend un tube intérieur, généralement désigné en 1, et un tube extérieur, généralement désigné en 2. Le tube intérieur 1 et le tube extérieur 2 sont coaxiaux.

Le tube intérieur 1 comporte, de l'intérieur vers l'extérieur, une couche interne 3, une couche intermédiaire 4 enrubannée, une armature 5 de renfort mécanique et une couche externe 6.

La couche interne 1 est en polyamide, de préférence en polyamide 12 (PA12). En raison de la flexibilité souhaitée, un grade plastifié est privilégié, typiquement à 12,5%. La couche interne a une épaisseur comprise par exemple entre 1 mm et 3 mm en fonction des diamètres.

La couche intermédiaire 4 est formée d'un ruban de polyester aluminisé. Typiquement, ce ruban est composé de 2 couches de polyester de quelques microns (usuellement 24 µm) prenant en sandwich une bande d'aluminium de 30 µm à 60 µm. Ce produit est par exemple produit sous le nom de MYLAR par la société Dupont de Nemours. Le ruban est déposé en long avec un recouvrement minimum autour du tube ("overlap"). Optionnellement, ce ruban peut être revêtu d'une fine couche d'adhésif (de type polyéthylène, élastomère thermoplastique oléfine, ou polyuréthanne), sur une ou deux faces, afin d'adhérer sur les couches situées immédiatement au-dessous et/ou au-dessus de lui. L'adhésif permet une meilleure tenue à l'éclatement (environ 50 bars) mais occasionne une moindre flexibilité. Les deux options sont compatibles avec la spécification et sont au choix de l'utilisateur final.

L'armature 5 de renfort mécanique est réalisée, par exemple, par tressage, tricotage ou guipage de fibres de renfort de type polyamide, polyester ou aramide, ou toute autre fibre améliorant la résistance à l'éclatement. On utilise ici des fibres en polyamide (ou en polyester) d'environ 400 dtex. Le guipage est ici privilégié car il permet d'obtenir la meilleure flexibilité.

La couche externe 6 est en polyamide, tel qu'un polyamide 12 (PA12) plastifié, avec une épaisseur de 0,5 à 3 mm par exemple, et a pour fonction de protéger l'armature contre les agressions externes.

Le tube extérieur 2 comprend, de l'intérieur vers l'extérieur, une couche interne 7, une couche intermédiaire 8 enrubannée et une couche externe 9.

La couche interne 7 est en polyamide, tel qu'un polyamide 12 (PA 12) plastifié. La couche interne 7 est annelée, l'annelure s'étendant hélicoïdalement. La couche interne 7 a un diamètre intérieur minimal D supérieur au diamètre extérieur d du tube intérieur 1 et une épaisseur de 1,5 à 3 mm. L'annelure permet une circulation de fluide entre le tube intérieur 1 et le tube extérieur 2.

La couche intermédiaire 8 est formée d'un ruban de polyester aluminisé comme la couche intermédiaire 4 du tube intérieur 1.

La couche externe 9 est en polyamide, tel qu'un polyamide 12 (PA12) plastifié, avec une épaisseur de 0,5 à 2,5 mm par exemple.

On notera que l'annelure exerce une double fonction :
- elle délimite un espace hélicoïdal de circulation de fluide tel que celui qui se serait échappé du tube intérieur 1 en cas de fuite,
- elle permet de compenser une dilatation du tube extérieur, les parties de paroi en regard formant l'annelure pouvant se rapprocher par déformation élastique, de sorte que l'allongement du tube extérieur résultant de la dilatation sera nul ou faible.

La canalisation est fabriquée au moyen du procédé décrit ci-après dans une ligne d'extrusion.

Le procédé de fabrication débute par la réalisation du tube intérieur.

La couche interne 3 est extrudée dans une filière 100, calibrée puis refroidie avant d'être enrubannée dans un poste 110 pour constituer la couche intermédiaire 4. La couche interne 3 refroidie sert de support au ruban lors de l'enrubannage.

Dans un poste de guipage 120, les fibres de renfort sont assemblées sur la couche intermédiaire 4 pour former l'armature 5.

La couche externe 6 est déposée sur l'armature 5 dans une filière 130.

Le tube intérieur 1 ainsi réalisé est amené dans une filière 140 pour l'extrusion de la couche interne 7 du tube extérieur 2. En sortie de la filière 140, des coquilles 150 sont appliquées sur le matériau sortant de la filière 140 pour former les annelures. On notera qu'une surpression d'air est maintenue entre le tube intérieur 1 et le matériau sortant de la filière 140 pour éviter que ce dernier ne colle au tube intérieur 1.

La couche interne 7 annelée est refroidie et le ruban de la couche intermédiaire 8 est déposé sur la couche interne 7 dans un poste d'enrubannage 160.

La couche externe 9 est extrudée sur la couche intermédiaire 8 dans une filière 170.

Bien entendu l'invention n'est pas limitée au mode de réalisation décrit mais englobe les variantes de réalisations entrant dans le cadre de l'invention telle que définie par les revendications.

En particulier, le nombre de couches de la canalisation peut être modifié. Ainsi, en variante, un ruban polyester, disposé en long avec un recouvrement ("overlap") peut être ajouté entre le tube intérieur 1 et le tube extérieur 2. Son rôle est d'empêcher l'adhésion du tube intérieur 1 et du tube extérieur 2 l'un avec l'autre, en particulier durant l'extrusion tandem. La couche interne 7 du tube extérieur 2 peut alors avoir un diamètre intérieur minimal sensiblement égal au diamètre extérieur du tube intérieur 1.

Les matériaux des couches peuvent également être modifiés. La couche interne 3 du tube intérieur 1 peut ainsi être réalisée en polyfluorure de vinylidène.

## Revendications

1. Canalisation de transport de carburant comportant un tube intérieur (1) et un tube extérieur (2) coaxiaux entre lesquels un espace est maintenu par un moyen d'entretoisement, **caractérisée en ce que** le tube extérieur comprend une couche externe (9) et une couche interne (7), la couche interne étant annelée hélicoïdalement et libre par rapport au tube intérieur pour former le moyen d'entretoisement.

2. Canalisation selon la revendication 1, **caractérisée en ce que** la couche interne (7) du tube extérieur (2) a un diamètre intérieur minimal supérieur au diamètre extérieur du tube intérieur(1).

3. Canalisation selon la revendication 1 ou la revendication 2, **caractérisée en ce que** le tube extérieur (2) comprend une couche intermédiaire (8) formée d'un ruban entourant la couche interne (7).

4. Canalisation selon la revendication 3, **caractérisée en ce que** la couche interne (7) du tube extérieur (2) est en polyamide.

5. Canalisation selon la revendication 3, **caractérisée en ce que** le ruban de la couche intermédiaire (8) du tube extérieur (2) est en polyester aluminisé.

6. Canalisation selon la revendication 3, **caractérisée en ce que** la couche externe (9) du tube extérieur (2) est en polyamide.

7. Canalisation selon la revendication 1, **caractérisée en ce que** le tube intérieur (1) comprend de l'intérieur vers l'extérieur une couche interne (3), une couche intermédiaire enrubannée (4), une armature tubulaire (5) en fibres de renfort mécanique et une couche externe (6).

8. Canalisation selon la revendication 7, **caractérisée en ce que** la couche interne (3) du tube intérieur (1) est en polyamide.

9. Canalisation selon la revendication 7, **caractérisée en ce que** la couche intermédiaire (4) enrubannée du tube intérieur (1) comprend un ruban de polyester aluminisé entourant la couche interne (3).

10. Canalisation selon la revendication 7, **caractérisée en ce que** l'armature tubulaire (5) en fibres de renfort mécanique comprend des fibres de polyamide, polyester ou aramide.

11. Canalisation selon la revendication 7, **caractérisée en ce que** la couche externe (6) du tube intérieur (1) est en polyamide.

12. Procédé de fabrication d'une canalisation de transport de carburant, comportant les étapes de :
- réaliser un tube intérieur (1),
- faire passer le tube intérieur dans une filière (140) d'extrudeuse,
- à la sortie de la filière d'extrudeuse, former des annelures hélicoïdales autour du tube intérieur (1) sur la matière sortant de la filière pour constituer une couche interne (7) d'un tube extérieur (2) libre par rapport au tube intérieur,
- enrubanner la couche interne avec un ruban pour former une couche intermédiaire (8) enrubannée du tube extérieur,
- extruder une couche externe (9) du tube extérieur.
